# FASCICULE DE BREVET EUROPEEN

(11) **EP 0 834 407 B1**
(45) Date de publication et mention de la délivrance du brevet: **26.09.2007**
(21) Numéro de dépôt: 97402310.3
(22) Date de dépôt: 02.10.1997
(51) Int. Cl.: B60C 17/06

(54) **Dispositif de roulage à plat pour véhicule automobile**
Notlaufvorrichtung für Fahrzeuge
Run-flat device for automobiles

(30) Priorité: 07.10.1996 FR 9612176
(43) Date de publication de la demande: 08.04.1998
(73) Titulaire: HUTCHINSON, 75008 Paris (FR)
(72) Inventeur: Michelot, Eric, 95000 Cergy (FR); Pelletier, Bruno, 60340 Villers Sous Saint-Leu (FR); Seradarian, Pascal, Lawrenceville, NJ 08648 (US)
(74) Mandataire: Schwartz, Thierry J.

(56) Documents cités:
- EP-A- 0 297 984
- EP-A- 0 600 771
- EP-A- 0 679 544
- US-A- 4 163 466
- PATENT ABSTRACTS OF JAPAN vol. 013, no. 055 (M-795), 8 février 1989 & JP 63 263106 A (YUJI HIDA), 31 octobre 1988,

## Description

L'invention concerne un dispositif de roulage à plat pour un véhicule automobile, notamment un véhicule militaire dont les roues sont à jante démontable, c'est-à-dire à jante comprenant un rebord démontable ou à jante réalisée en deux parties fixées l'une à l'autre.

On a déjà proposé des dispositifs de roulage à plat pour véhicule automobile, qui sont formés d'un anneau en élastomère monté sur la jante d'une roue à l'intérieur du pneumatique équipant la roue, l'anneau en élastomère comportant une base annulaire serrée sur la jante et maintenant les talons du pneumatique en appui sur les rebords de la jante, et une partie annulaire en saillie radiale qui est orientée vers la bande de roulement du pneumatique et qui, en cas de forte baisse de pression dans le pneumatique, constitue une butée qui s'applique sur la bande de roulement du pneumatique dans sa zone de contact avec le sol et qui empêche les flancs et la bande de roulement du pneumatique d'être écrasés ou détériorés par les rebords de la jante, ce qui permet au conducteur du véhicule de continuer sa route sans devoir s'arrêter immédiatement pour changer de roue.

On a jusqu'à présent cherché à réduire autant que possible la taille de ces anneaux de roulage, aussi bien en ce qui concerne leur hauteur radiale à l'intérieur d'un pneumatique que leur largeur ou dimension axiale, afin de diminuer leur poids et leur coût tout en conservant une possibilité de roulage à plat sur une distance d'au moins plusieurs dizaines de km à une vitesse d'au moins 50 à 60 km/h dans des conditions acceptables de sécurité.

On est ainsi parvenu à mettre au point, pour des véhicules de tourisme, des dispositifs de roulage à plat qui sont légers (quelques kilos) et très performants, puisqu'ils permettent de parcourir une distance supérieure à 150 km à une vitesse de l'ordre de 80 km/h en conservant une bonne tenue de route en virage et au freinage, à tel point que le conducteur du véhicule ne s'aperçoit pas toujours qu'il roule avec une roue à plat.

On a également développé et mis au point des dispositifs de roulage de ce type pour des véhicules militaires, qui comprennent des anneaux de roulage plus lourds et plus robustes que ceux des véhicules de tourisme, mais qui ont cependant été allégés et réduits en taille autant que possible pour diminuer leur coût et ne pas pénaliser la mobilité des véhicules.

Il est ainsi connu du document de Brevet EP 0297 984 un dispositif de roulage à plat logeant un renfort annulaire de masse et de hauteur réduites, ce renfort étant excentré à l'intérieur du dispositif.

Par ailleurs, le document de Brevet JP 63263106 (et Patent Abstracts of Japan, vol. 013, n° 055 (M-795), 8 Janvier 1989) divulgue un pneumatique munie d'un anneau apte à permettre le roulage après crevaison. L'anneau présente un ensemble de masse/taille supérieur mais ne prévoit aucune protection en cas d'explosion de mine.

L'invention a pour but de modifier ces dispositifs connus de roulage à plat de façon à leur conférer une fonction de protection des occupants d'un véhicule au passage sur une mine tout en conservant leur fonction normale de roulage à plat.

Elle propose, à cet effet, un dispositif de roulage à plat pour véhicule automobile selon la revendication 1.

Le surdimensionnement de l'anneau de roulage à plat et son positionnement sur la jante de la roue vers l'intérieur du véhicule permettent de constituer une protection efficace des passagers du véhicule contre l'explosion d'une mine, tout en conservant une fonction de roulage à plat après l'explosion de la mine.

De façon typique, le surdimensionnement en masse de l'anneau de roulage est d'au moins 100 %, et de préférence d'environ 200 %.

Le surdimensionnement en hauteur radiale de l'anneau de roulage est au moins égal à 50 % et est de préférence d'environ 70 à 80 %.

Le surdimensionnement en largeur (ou dimension dans l'axe de la roue) de la partie radialement externe de l'anneau de roulage est d'au moins 50 %.

En outre, la face radiale de la partie annulaire en saillie de l'anneau de roulage, qui est située du côté de l'extérieur du véhicule, est concave.

Dans un mode de réalisation préféré de l'invention, l'anneau de roulage est réalisé en polyisoprène-polybutadiène (IRBR) et est renforcé par au moins une nappe de spires de câblés dans sa base annulaire et par des couches superposées de tissu, par exemple de polyamide, dans sa partie annulaire en saillie radiale.

Ces dispositifs de roulage à plat sont destinés à équiper des roues à jantes démontables, c'est-à-dire des roues dont les jantes comprennent un rebord démontable ou sont réalisées en deux parties fixées l'une à l'autre, l'anneau de roulage ayant un diamètre interne sensiblement égal au diamètre externe de la jante et sa base annulaire ayant une largeur ou dimension axiale qui est légèrement supérieure à la distance entre les talons du pneumatique montés sur la roue, de telle sorte que l'anneau de roulage, une fois monté sur la jante avec le pneumatique, est en compression axiale entre les talons du pneumatique et en compression radiale sur la jante de la roue, ce qui permet de maintenir les talons du pneumatique fermement appliqués sur les rebords de la jante et de monter fixement l'anneau de roulage sur la jante, par serrage radial et sans utiliser à cet effet d'outils ou de moyens particuliers de serrage ou de tension.

De façon générale, l'invention permet de protéger efficacement, pour un coût réduit, les occupants d'un véhicule contre l'explosion d'une mine déclenchée par passage d'une roue du véhicule en utilisant pour cela un dispositif de roulage à plat qui permet au véhicule de continuer sa route sur une certaine distance après l'explosion de la mine, ce dispositif étant obtenu par un surdimensionnement d'un dispositif connu d'environ 50 % au moins de ses dimensions radiale et axiale.

L'invention sera mieux comprise et d'autres détails, caractéristiques et avantages de celle-ci apparaîtront plus clairement à la lecture de la description qui suit, faite à titre d'exemple en référence aux dessins annexés dans lesquels :
- la figure 1 est une vue partielle schématique en coupe axiale d'un dispositif connu de roulage à plat, représenté monté sur la jante d'une roue de véhicule automobile ;
- la figure 2 est une vue correspondant à la figure 1, mais représente un dispositif de roulage à plat selon l'invention monté sur la jante de la figure 1 ;
- la figure 3 est une vue partielle schématique en coupe axiale d'une variante de réalisation du dispositif selon l'invention, pour une roue de plus grande taille.

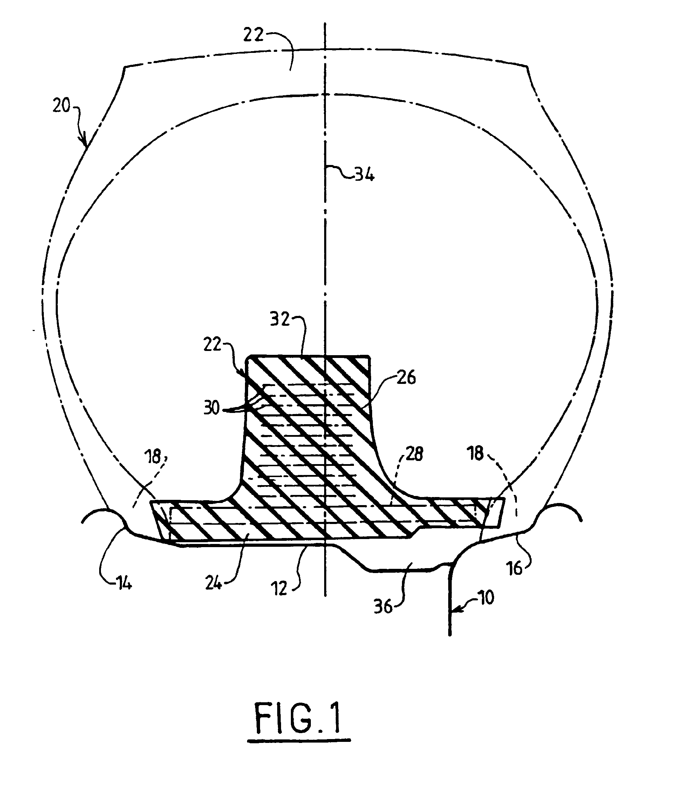

On se réfère d'abord à la figure 1, qui est une vue schématique partielle d'un dispositif de roulage à plat d'un type connu, fabriqué par la Demanderesse et équipant une roue 10 dont la jante 12 comprend un rebord latéral fixe 14 et un rebord latéral démontable 16 sur lesquels s'appuient les talons 18 d'un pneumatique 20 représenté en traits mixtes.

Le dispositif de roulage à plat de la figure 1 est constitué d'un anneau 22 en élastomère comprenant une base annulaire 24 et une partie annulaire 26 en saillie radiale sur la base 24, cette saillie 26 étant orientée en direction de la bande de roulement 22 du pneumatique.

L'anneau 22 est réalisé en un élastomère tel qu'un polyisoprène-polybutadiène (IRBR) et est renforcé dans sa base 24 par une ou plusieurs nappes 28 de câblés sensiblement inextensibles enroulés en spirale (comme dans une courroie de transmission de puissance) et dans sa partie radiale 26 par des couches superposées 30 de tissu, par exemple de polyamide.

La base 24 a un diamètre interne sensiblement égal en diamètre externe de la jante 12 et une largeur ou dimension parallèlement à l'axe de la roue 10 qui est légèrement supérieure à la distance entre les talons 18 du pneumatique appliqués sur les rebords 14, 16 de la jante de telle sorte que, quand l'anneau 22 est monté en place sur la jante 12 entre les talons 18 du pneumatique, il est comprimé axialement et exerce une pression sur les talons 18 du pneumatique pour les appliquer fortement sur les rebords 14, 16 de la jante.

Cette compression axiale de la base 24 de l'anneau 22 a également pour effet de le resserrer radialement sur la jante 12 de la roue, en raison de la présence de la ou des nappes de câblés 28 dans la base 24 de l'anneau de roulage : en effet, ces câblés étant par nature sensiblement inextensibles (ils sont en général constitués de fils de polyamide, d'aramide (KEVLAR) ou analogue), la compression axiale de la base 24 ne peut se traduire par une expansion radiale de la partie de la base 24 qui comprend la ou les nappes de câblés 28 et provoque au contraire un déplacement de matière orienté radialement vers l'axe de la roue, la matière venant ainsi se serrer sur la jante 12.

Comme on le voit en figure 1, la hauteur radiale de l'anneau 22 sur la jante 12 est relativement faible et inférieure à la moitié de la hauteur ou dimension radiale interne du pneumatique 20, et la largeur de la face radialement externe 32 de l'anneau 22 est elle aussi très nettement inférieure à la moitié de la largeur de la bande de roulement 22 du pneumatique. En outre, l'anneau 22 est en principe centré sur le plan radial médian 34 de la roue (dans l'exemple de la figure 1, il est légèrement décalé du côté du rebord interne fixe 14 de la jante 12 en raison de la présence d'un décrochement 36 de la jante du côté de son rebord externe démontable 16.

Par exemple, cet anneau de roulage 22 a un poids de l'ordre de 15 kg lorsqu'il est destiné à une roue dont la jante 12 a un diamètre de 16,5 pouces (419,1 mm) et une largeur (ou dimension dans l'axe de la roue) de 8,25 pouces (209,55 mm), la hauteur radiale de l'anneau 22 par rapport à la jante 12 étant d'environ 90 mm.

En cas de crevaison du pneumatique, un tel anneau 22 permet à un véhicule militaire léger de parcourir une distance d'au moins 50 km à une vitesse d'au moins 50 km/h en terrain plus ou moins accidenté.

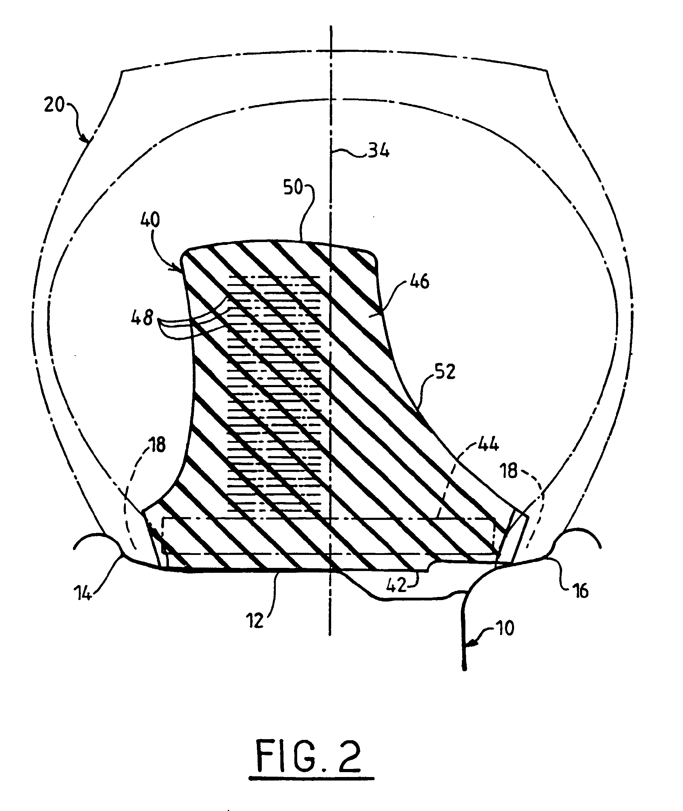

On se réfère maintenant à la figure 2 qui représente un dispositif selon l'invention, destiné à équiper la même roue que celle représentée en figure 1, ce dispositif selon l'invention étant constitué d'un anneau 40 de roulage à plat dérivé de l'anneau connu 22 par un accroissement de sa masse, de sa hauteur radiale et de la largeur (ou dimension axiale) de sa partie annulaire en saillie radiale.

L'anneau 40 est réalisé dans le même élastomère que l'anneau connu 22 et comprend une base annulaire 42 appliquée sur la jante 12 de la roue 10 et renforcée par une ou plusieurs nappes 44 de câblés sensiblement inextensibles, et une partie annulaire 46 en saillie radiale sur la base 42, renforcée par des couches superposées 48 de tissu, par exemple de polyamide, comme l'anneau 22 précédemment décrit.

Le poids de l'anneau 40 selon l'invention est cependant de l'ordre de 45 kg pour une roue correspondant à l'exemple indiqué ci-dessus (diamètre de la jante de 16,5 pouces et largeur de la jante de 8,25 pouces) la hauteur radiale de l'anneau 40 par rapport à la jante 12 est d'environ 160 mm et la largeur de sa face radialement externe 50 est d'environ 95 mm (celle de l'anneau 22 étant d'environ 60 mm).

Le surdimensionnement de l'anneau connu 22 qui permet d'obtenir l'anneau 40 selon l'invention est donc de 200 % en ce qui concerne son poids, de 75 % en ce qui concerne sa hauteur radiale et de 50 % en ce qui concerne la largeur de sa partie radiale en saillie.

De plus, la partie annulaire 46 en saillie radiale de l'anneau 40 est déportée axialement vers l'intérieur du véhicule, c'est-à-dire du côté du rebord latéral fixe 14 de la jante 12 par rapport au plan radial médian 34 de la roue.

La face radiale 52 de la partie 46 de l'anneau 40, tournée vers l'extérieur du véhicule, est de forme concave.

La largeur ou dimension axiale de la base 42 est légèrement supérieure à la distance normale entre les talons 18 du pneumatique appliqué sur les rebords 14, 16 de la jante, le diamètre interne de la base 42 étant sensiblement égal au diamètre externe de la jante 12, de sorte que, comme déjà décrit, le montage de l'anneau 40 à l'intérieur du pneumatique 20 sur la jante 12 provoque une compression axiale de la base 42 entre les talons du pneumatique et un serrage radial de cette base sur la jante 12 de la roue.

Au passage de la roue 10 sur une mine posée sur le sol ou enterrée, l'explosion de la mine se traduit par une onde de choc et par la projection d'éclats. Le pneumatique 20 est en général détruit par l'explosion, mais l'onde de choc est en partie réfléchie vers l'extérieur du véhicule par la face radiale 52 de l'anneau 40 et en partie absorbée par la masse d'élastomère constituant l'anneau 40. Les éclats sont également, en partie, déviés vers l'extérieur du véhicule ou arrêtés par l'anneau 40, sans destruction de celui-ci, de sorte que le véhicule conserve une possibilité de déplacement avec une stabilité correcte sur un terrain relativement accidenté.

L'anneau 40 de roulage à plat permet donc de protéger les occupants du véhicule contre l'explosion d'une mine, cette protection étant suffisante pour éviter que l'explosion de la mine mette en danger la vie des occupants.

Le surdimensionnement de l'anneau 40 du roulage à plat est limité par des considérations pratiques : dans des conditions de roulage en tout terrain, le pneumatique 20 gonflé à une pression correcte ne doit pas venir buter ou frotter sur l'anneau 40 de roulage à plat au passage sur une bosse ou dans un creux ou en cas de freinage brusque.

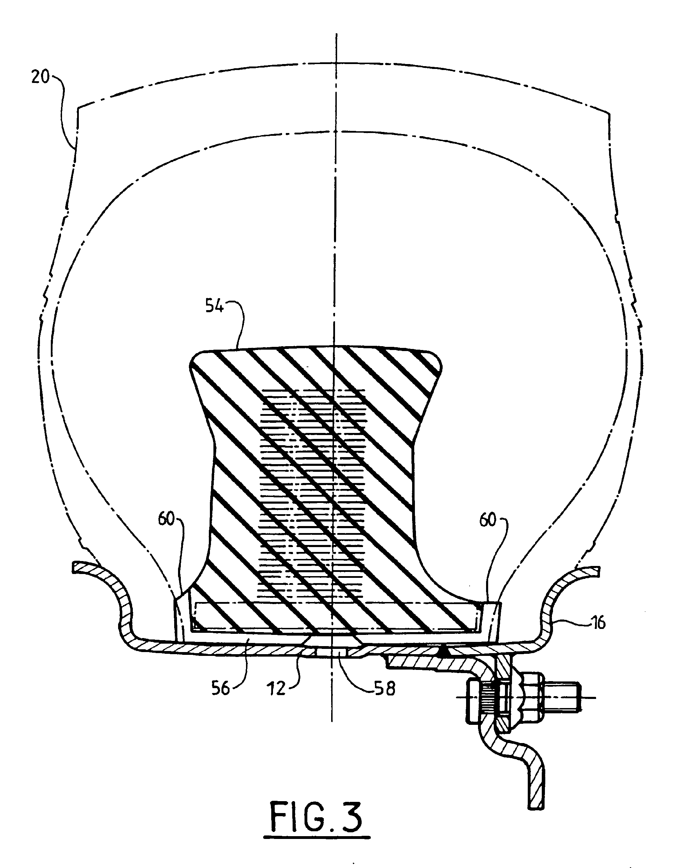

On se réfère maintenant à la figure 3, qui représente schématiquement une variante de réalisation du dispositif selon l'invention, qui est ici destiné à équiper une roue de plus grande dimension, par exemple une roue dont la jante 12 a un diamètre de 20 pouces (508 mm) et une largeur (ou dimension axiale) de 10 pouces (254 mm).

Le dispositif selon l'invention est constitué d'un anneau 54 de roulage à plat ayant la même structure générale que celui de la figure 2, et dont les dimensions sont les suivantes :
- hauteur radiale au-dessus de la jante 12 : environ 190 mm,
- largeur (dimension axiale) de la face radialement externe : 165 mm environ,
- poids : de l'ordre de 70 kg.

On peut noter, sur la représentation schématique de la figure 3, la présence d'un canal axial 56 formé dans la base annulaire de l'anneau 54, et communiquant avec une ouverture 58 de la jante 12 qui permet le montage d'une valve de gonflage du pneumatique 20, les extrémités 60 du canal 56 débouchant à l'intérieur du pneumatique, entre les talons de celui-ci et l'anneau 54 pour permettre un libre passage de l'air de gonflage.

On a également représenté en figure 3, pour plus de clarté, un exemple de structure d'une jante 12 à rebord 16 démontable, cette jante étant bien connue de l'homme du métier.

## Revendications

1. Dispositif de roulage à plat pour véhicule automobile, comprenant un anneau de roulage (40, 54) en élastomère, qui est monté serré sur la jante (12) d'une roue (10) du véhicule et qui comporte une base annulaire (42) s'étendant sur la jante entre les talons (18) du pneumatique (20) en les maintenant appliqués sur les rebords (14, 16) de la jante et une partie annulaire (46) en saillie radiale sur ladite base pour supporter la bande de roulement (22) du pneumatique en cas de dégonflement de celui-ci, et déportée axialement vers l'intérieur du véhicule, **caractérisé en ce que** ladite partie annulaire (46) en saillie présente une face radiale (52), tournée vers l'extérieur, de forme concave et est surdimensionnée en masse et en taille par une hauteur radiale supérieure à la moitié de la hauteur interne de la bande de roulement (22) pour former une protection contre l'explosion d'une mine déclenchée par passage de la roue (10), en absorbant partiellement l'onde de choc de l'explosion, en la réfléchissant partiellement vers l'extérieur du véhicule et en protégeant les occupants du véhicule contre les éclats.

2. Dispositif selon la revendication 1, **caractérisé en ce que** le surdimensionnement en masse de l'anneau de roulage (40) est d'au moins 100 %.

3. Dispositif selon la revendication 1 ou 2, **caractérisé en ce que** le surdimensionnement en masse de l'anneau de roulage (40) est d'environ 200 %.

4. Dispositif selon l'une des revendications précédentes, **caractérisé en ce que** le surdimensionnement en hauteur radiale de l'anneau de roulage est au moins égal à 50 %.

5. Dispositif selon la revendication 4, **caractérisé en ce que** le surdimensionnement en hauteur radiale de l'anneau de roulage est d'environ 70 à 80 %.

6. Dispositif selon l'une des revendications précédentes, **caractérisé en ce que** la partie radialement externe (50) de l'anneau de roulage (40) est surdimensionnée en largeur (dimension parallèlement à l'axe de la roue) d'au moins 50 %.

7. Dispositif selon l'une des revendications précédentes, **caractérisé en ce que** l'anneau de roulage (40, 54) est réalisé en polyisoprène-polybutadiène et est renforcé par au moins une nappe (44) de spires de câblés dans sa base annulaire (42) et par des couches superposées (48) de tissu, par exemple de polyamide, dans sa partie annulaire (46) en saillie radiale.

8. Dispositif selon l'une des revendications précédentes, **caractérisé en ce que**, la jante (12) étant du type démontable, l'anneau de roulage (40, 54) a un diamètre interne sensiblement égal au diamètre externe de la jante (12) et sa base annulaire (42) a une largeur ou dimension axiale légèrement supérieure à la distance entre les talons (18) du pneumatique monté sur la roue, de sorte que l'anneau de montage (40, 54), une fois monté sur la jante avec le pneumatique, est en compression axiale entre les talons du pneumatique et en compression radiale sur la jante (12).

## Claims

1. A device for enabling a motor vehicle to run on a flat tire, the device comprising an elastomer running ring (40, 54) which is tightly mounted on the rim (12) of a vehicle wheel (10) and which has an annular base (42) extending over the rim between the beads (18) of the tire (20) holding them pressed against the margins (14, 16) of the rim, and an annular portion (46) projecting radially from said base to support the tread (22) of the tire in the event of the tire deflating, the device being offset axially towards the inside of the vehicle, and **characterized in that** said projecting annular portion (46) presents an outwardly-facing radial face (52) of concave shape and is overdimensioned in mass and in size by a radial height greater than half the internal height of the tread (22) to form protection against the explosion of a mine triggered by passage of the wheel (10), by absorbing part of the shockwave of the explosion, by reflecting part of the shockwave away from the vehicle, and by protecting the occupants of the vehicle against mine fragments.

2. A device according to claim 1, **characterized in that** the overdimensioning of the mass of the running ring (40) is at least 100%.

3. A device according to claim 2, **characterized in that** the overdimensioning of the mass of the running ring (40) is about 200%.

4. A device according to any preceding claim, **characterized in that** the overdimensioning of the radial height of the running ring is at least 50%.

5. A device according to claim 4, **characterized in that** the overdimensioning of the radial height of the running ring is about 70% to 80%.

6. A device according to any preceding claim, **characterized in that** the radially-outer portion (50) of the running ring (40) is overdimensioned in width (dimension parallel to the axis of the wheel) by at least 50%.

7. A device according to any preceding claim, **characterized in that** the running ring (40, 54) is made of polyisoprene-polybutadiene and is reinforced by at least one sheet (44) of turns of cord in its annular base (42) and by superposed layers (48) of cloth, e.g. polyamide, in its radially-projecting annular portion (46).

8. A device according to any preceding claim, **characterized in that** for a rim (12) of the removable type, the running ring (40, 54) has an inside diameter substantially equal to the outside diameter of the rim (12) and its annular base (42) is of a width or axial dimension that is slightly greater than the distance between the beads (18) of the tire mounted on the wheel, such that the running ring (40, 54) once mounted on the rim together with the tire is compressed axially between the beads of the tire and radially against the rim (12).

## Patentansprüche

1. Vorrichtung zum Fahren ohne Luft für ein Kraftfahrzeug, umfassend einen Rollring (40, 54) aus einem Elastomer, welcher eng auf der Felge (12) eines Rades (10) des Fahrzeugs angebracht ist und welcher eine ringförmige Basis (42), welche sich auf der Felge zwischen den Wülsten (18) des Luftreifens (20) erstreckt, wobei diese an den Kanten (14, 16) der Felge angesetzt gehalten werden, und einen auf der Basis radial hervorstehenden ringförmigen Teil (46), um den Laufstreifen (22) des Luftreifens im Fall eines Luftverlierens desselbens zu halten, umfasst, **dadurch gekennzeichnet, dass** der hervorstehende ringförmige Teil (46) eine nach außen gewandte radiale Seite (52) mit konkaver Form aufweist und bezüglich Masse und Größe überdimensioniert ist um eine radiale Höhe, welche größer ist als die Hälfte der internen Höhe des Laufstreifens (22), so dass ein Schutz gegen die Explosion einer Mine gebildet wird, welche durch Passieren der Straße (10) ausgelöst wird, wobei teilweise die Stoßwelle der Explosion absorbiert wird, wobei diese teilweise in Richtung des Äußeren des Fahrzeugs reflektiert wird, und wobei die Insassen des Fahrzeugs gegen die Splitter geschützt werden.

2. Vorrichtung nach Anspruch 1, **dadurch gekennzeichnet, dass** die Überdimensionierung bezüglich Masse des Rollrings (40) wenigstens 100 % ist.

3. Vorrichtung nach Anspruch 1 oder 2, **dadurch gekennzeichnet, dass** die Überdimensionierung bezüglich Masse des Rollrings (40) etwa 200 % ist.

4. Vorrichtung nach einem der vorhergehenden Ansprüche, **dadurch gekennzeichnet, dass** die Überdimensionierung bezüglich radialer Höhe des Rollrings wenigstens gleich 50 % ist.

5. Vorrichtung nach Anspruch 4, **dadurch gekennzeichnet, dass** die Überdimensionierung bezüglich radialer Höhe des Rollrings etwa 70 bis 80 % ist.

6. Vorrichtung nach einem der vorhergehenden Ansprüche, **dadurch gekennzeichnet, dass** der radial äußere Teil (50) des Rollrings (40) bezüglich Breite (Abmessung parallel zur Achse des Rades) um wenigstens 50 % überdimensioniert ist.

7. Vorrichtung nach einem der vorhergehenden Ansprüche, **dadurch gekennzeichnet, dass** der Rollring (40, 54) aus Polyisopren-Polybutadien realisiert ist und durch wenigstens ein Drahtwindungsvlies (44) in seiner ringförmigen Basis (42) und durch überlagerte Gewebeschichten (48), beispielsweise aus Polyamid, in seinem radial hervorstehenden ringförmigen Teil (46) verstärkt ist.

8. Vorrichtung nach einem der vorhergehenden Ansprüche, **dadurch gekennzeichnet, dass**, wobei die Felge (12) vom demontierbaren Typ ist, der Rollring (40, 54) einen Innendurchmesser aufweist, welcher im Wesentlichen gleich dem Außendurchmesser der Felge (12) ist, und seine ringförmige Basis (42) eine Breite oder axiale Abmessung aufweist, welche geringfügig größer ist als der Abstand zwischen den Wülsten (18) des auf dem Rad montierten Luftreifens, so dass der Montagering (40, 54), sobald er mit dem Luftreifen auf der Felge angebracht ist, in axialer Kompression zwischen den Wülsten des Luftreifens und in radialer Kompression auf der Felge (12) ist.
